(19) Europäisches Patentamt
European Patent Office
Office européen des brevets

(11) Veröffentlichungsnummer: 0 464 968 A2

## (12) EUROPÄISCHE PATENTANMELDUNG

(21) Anmeldenummer: 91250135.0

(22) Anmeldetag: 17.05.91

(51) Int. Cl.5: B01D 11/02, G01N 30/06

(30) Priorität: 02.07.90 DE 4021239

(43) Veröffentlichungstag der Anmeldung:
08.01.92 Patentblatt 92/02

(84) Benannte Vertragsstaaten:
BE CH DE FR GB LI NL

(71) Anmelder: Bruker-Franzen Analytik GmbH
Fahrenheitstrasse 4
W-2800 Bremen 33(DE)

(72) Erfinder: Baykut, Gökhan, Dr.
Fahrenheitstrasse 4
W-2800 Bremen 33(DE)

(74) Vertreter: Goddar, Heinz J., Dr. et al
FORRESTER & BOEHMERT
Widenmayerstrasse 4/I
W-8000 München 22(DE)

(54) Verfahren und Vorrichtung zum Extrahieren gelöster flüchtiger Substanzen aus Flüssigkeiten in die Gasphase.

(57) Ein Verfahren zum Exrahieren gelöster flüchtiger Substanzen aus Flüssigkeiten in die Gasphase, bei dem die extrahierten gasförmigen Substanzen aus einem Dampfraum abgezogen werden, dadurch gekennzeichnet, daß die die Substanz(en) enthaltende Flüssigkeit in den Dampfraum versprüht wird. Die Vorrichtung zum Durchführen des Verfahrens weist eine Extraktionskammer mit Probeneinlaß, Flüssigkeitsauslaß und Auslaß zur Probenentnahme auf und ist dadurch gekennzeichnet, daß eine Injektionseinrichtung vorgesehen ist, welche den Probeneinlaß umfaßt und in welcher der Probeneinlaß in die Extraktionskammer mündet. Es kann ein Einlaß für Trägergas vorgesehen sein, wobei das Trägergas zusammen mit der flüchtigen Substanz ableitbar ist, sowie eine Probenkammer für Flüssigkeit, die mit der Extraktionskammer in Verbindung steht.

Fig.1

Die Erfindung betrifft ein Verfahren zum Extrahieren gelöster flüchtiger Substanzen aus Flüssigkeiten in die Gasphase, bei dem die extrahierten gasförmigen Substnzen aus einem Dampfraum abgezogen werden, sowie eine Vorrichtung zum Durchführen des Verfahrens.

Die Analyse gelöster oder dispergierter Chemikalien in Wasser kann mit Hilfe der gaschromatographischen Dampfraum-Analyse durchgeführt werden, einem Verfahren, bei dem die Probe in ein Gas-Flüssigkeits-Verteilungsgleichgewicht mit einem Dampfraum gebracht wird. Wenn sich das Gleichgewicht eingestellt hat, wird eine Probe aus dem Dampfraum gaschromatographisch untersucht. Es hat sich eine Extraktionstechnik besonders bewährt, bei der nach der Probenentnahme das Gas im Dampfraum gegen ein Trägergas ausgetauscht wird. Wenn sich das dadurch gestörte Gleichgewicht erneut eingestellt hat, wird eine zweite Probe entnommen. Diese Vorgehensweise wird mehrmals wiederholt, wobei jeweils die Konzentration der entnommenen gasförmigen Probe bestimmt wird. Die ermittelten Konzentrationswerte stehen in einem funktionalen Zusammenhang, woraus ein Maß für die Menge der in der Probe enthaltenen Stoffe abgeleitet werden kann. Diese Technik liefert für Substanzen mit einer hohen Fugazität genaue Ergebnisse.

Eine Voraussetzung für eine gute Durchführbarkeit des Verfahrens ist es, daß das Gas-Flüssigkeit-Verteilungsgleichgewicht möglichst schnell einzustellen ist. Kurze Einstellzeiten werden erreicht, wenn die Kontaktfläche zwischen der Flüssigkeit und dem Trägergas sehr groß ist. Um die Kontaktfläche möglichst groß zu halten, wird die Flüssigkeit mit einem Gasstrom kontinuierlich durchperlt. Ein solches Verfahren ist aus dem Aufsatz "Feldmessung von Emission und Deposition atmosphärischer Spurengase im Boden und Wasser", Spurengasanalytik Suppl. 3/85, Seiten 74-78, und aus dem Aufsatz "Continuous Monitoring of Volatile Hydrocarbons in Water at the ppb Level", International Laboratory, September 1989, Seiten 16-20, bekannt. Die in die Flüssigkeit eingeleiteten Gasblasen oder Gasperlen bieten eine große Kontaktfläche mit der Flüssigkeit, die um so größer ist, je kleiner der Durchmesser der einzelnen Blasen oder Perlen gehalten werden kann und je größer die Anzahl der Blasen ist. Beim Aufsteigen in der Flüssigkeit werden die flüchtigen Bestandteile in den Gasblasen gesammelt. Die entnommenen Proben werden üblicherweise in einer Sammeleinrichtung vorkonzentriert, dann desorbiert und schließlich der weiteren Analyse zugeführt.

Das Extrahieren mittels Gasperlen kann kontinuierlich oder diskontinuierlich durchgeführt werden, jedoch ist dieses Verfahren auf Flüssigkeitsproben beschränkt, die keine Tenside oder Schaumbildner enthalten. Wenn Schäume in den Dampfraum eintreten, wird die gesamte Extraktionsvorrichtung unbrauchbar. Ein beträchtlicher Anteil industrieller Abwässer enthält solche oberflächenaktive Verbindungen. Solche Arten verunreinigter Flüssigkeiten können mit dem bekannten Verfahren und der bekannten Vorrichtung nicht behandelt werden. Das bekannte Verfahren ist auch nicht für Schlämme einsetzbar, da die darin dispergierten Anteile unter Umständen nur schwer in die Gasperlen aufgenommen werden. Der Kontakt zwischen den verschiedenen Teilen des Schlammes und den Gasblasen, die nach dem Archimedischen Prinzip frei und langsam hochsteigen, kann aus rein mechanischen Gründen mangelhaft sein. Eine Erhöhung des Gasdruckes kann dies nicht ausgleichen, sie verursacht vielmehr eine Fusion der kleinen Gasblasen zu größeren, die dann wiederum langsam weitersteigen. Durch die Fusion wird auch die Gesamtoberfläche des Gases verringert, was zusätzlich die Übergangsrate der zu entfernenden Substanzen herabsetzt.

Es ist daher die Aufgabe der Erfindung, ein Verfahren zum Extrahieren gelöster flüchtiger Substanzen aus Flüssigkeiten in die Gasphase und eine Vorrichtung zum Durchführen des Verfahrens bereitzustellen, womit auch schäumende Flüssigkeiten und Schlämme behandelt werden können.

Diese Aufgabe wird durch ein Verfahren mit den Merkmalen des Anspruchs 1 und durch eine Vorrichtung mit den Merkmalen des Anspruchs 6 gelöst. Vorteilhafte Ausgestaltungen ergeben sich aus den Kennzeichen der jeweiligen Unteransprüche.

Beim neuen Verfahren wird die die Substanz oder Substanzen enthaltende Flüssigkeit in dem Dampfraum versprüht. Durch das Versprühen wird die Kontaktoberfläche zwischen Flüssigkeit und Gas erhöht, so daß sich das Verteilungsgleichgewicht in kürzerer Zeit einstellt. Beim bekannten Verfahren waren die Gasperlen die dynamische Komponente, während die Dynamik hier durch die Flüssigkeit getragen wird. Diese Umkehr von dynamischen und stationären Einsatzmitteln führt zur Bildung großer Oberflächengebiete zum Extrahieren, wobei das Verfahren auch auf schäumende Abwässer und auf Schlämme angewendet werden kann. Infolge der extrem kleinen Krümmungsradien der versprühten Flüssigkeitströpfchen tritt eine Dampfdruckerhöhung auf, die den Übergang von in den Flüssigkeitströpfchen gelösten gasförmigen Bestandteilen in das Trägergas begünstigt.

Das Verfahren kann diskontinuierlich betrieben werden, wenn eine vorbestimmte Flüssigkeitsmenge gesammelt wird, bevor die Flüssigkeit versprüht wird.

Das erfindungsgemäße Verfahren kann mit Hilfe einer Vorrichtung durchgeführt werden, die eine Extraktionskammer umfaßt, welche einen Probeneinlaß, einen Flüssigkeitsauslaß und einen Auslaß zur Probenentnahme aufweist, und in der weiterhin eine Injektionseinrichtung vorgesehen ist, welche den Probeneinlaß umfaßt und in welcher der Probeneinlaß in die Extraktionskammer mündet.

Mit Hilfe der Injektionseinrichtung, die auf unterschiedlichste Weise gestaltet sein kann und beispielsweise ein Einspritzventil oder eine Düse umfaßt, in welcher der Probeneinlaß mündet, wird die Flüssigkeit innerhalb der Extraktionskammer versprüht. Je nach Wahl der Düse kann die Form des Flüssigkeitsstrahls geeignet gewählt werden.

Für den diskontinuierlichen Betrieb ist eine Probenkammer vorgesehen, in der die Flüssigkeit zunächst gesammelt wird, bevor sie über ein magnetisches Abschaltventil in die Extraktionskammer entlassen wird.

Die Extraktionskammer besteht beispielsweise aus einem Glas- oder Metallkolben, in den der Flüssigkeitsstrahl so eingeleitet wird, daß er auf die Innenwände des Kolbens auftrifft und je nach Geschwindigkeit der Flüssigkeitströpfchen an den Innenwänden weiter verspritzt oder als dünner Flüssigkeitsfilm an den Innenwänden abläuft. In beiden Fällen wird eine hinreichend große Kontaktfläche zwischen Flüssigkeit und Gas gebildet, so daß Diffusionsprozesse schnell ablaufen können und kürzere Einstellzeiten als bisher möglich zu erwarten sind. Um das Aufbrechen des Flüssigkeitsstrahls zu begünstigen, können auch entsprechende Vorrichtungen in der Extraktionskammer vorgesehen sein, beispielsweise eine Stange, auf deren Stirnfläche der Flüssigkeitsstrahl auftrifft, oder ein motorgetriebener Drehteller, der zudem durch Lamellen oder dergleichen so ausgestaltet ist, daß ein Vernebeln des Flüssigkeitsstrahles in kleinste Tröpfchen gewährleistet ist.

Die an den Innenwänden ablaufende Flüssigkeit wird dem Flüssigkeitsauslaß zugeleitet. Es ist bevorzugt, daß über dem Flüssigkeitsauslaß immer ein gewisser Flüssigkeitsspiegel aufrechterhalten wird, damit kein Gas durch den Flüssigkeitsauslaß entweichen kann.

Weitere Einzelheiten können der nun folgenden Beschreibung entnommen werden, in der die Erfindung lediglich beispielhaft anhand der Zeichnung erläutert werden soll; dabei zeigen:

Fig. 1          eine schematische Gesamtansicht der erfindungsgemäßen Vorrichtung,

Fig. 1a          eine alternative Ausführungsform der erfindungsgemäßen Vorrichtung,

Fig. 2          ein Steuerdiagramm für die Ventilanordnung gemäß der Vorrichtung aus Fig. 1,

Fig. 3          eine Ausführungsform der Extraktionskammer der erfindungsgemäßen Vorrichtung,

Fig. 4          die Anordnung der Ein- und Auslässe für Flüssigkeit und Trägergas auf dem Verschlußstopfen für die Extraktionskammer aus Fig. 3,

Fig. 5          eine weitere Ansicht der Anordnung auf dem Verschlußstopfen,

Fig. 6          die Probenkammer der erfindungsgemäßen Vorrichtung aus Fig. 1, teilweise aufgerissen,

Fig. 6a          das Druckventil aus Fig. 6 in einer Schemaansicht,

Fig. 7a          ein Ausführungsbeispiel einer Extraktionskammer,

Fig. 7b          ein weiteres Ausführungsbeispiel einer Extraktionskammer mit einer Vorrichtung zum Aufbrechen des Flüssigkeitsstrahls,

Fig. 7c          eine Ausführungsform der Extraktionskammer mit einem Drehteller als Vorrichtung zum Aufbrechen des Flüssigkeitsstrahls,

Fig. 8          eine Ansicht einer Extraktionskammer, in die der Flüssigkeitsstrahl mit niedrigerer Geschwindigkeit eingeleitet wird,

Fig. 9          eine Ausführungsform einer Extraktionskammer, bei der die Wände ein wellenförmiges Profil aufweisen,

Fig. 10          eine Ausführungsform der Extraktionskammer, bei der diese aus einem wendelförmig geführten Rohr besteht,

Fig. 11          eine Ausführungsform der Extraktionskammer, bei der eine Gasdüse mit Sprührichtung senkrecht zur Sprührichtung der Düse für die Flüssigkeit angeordnet ist,

Fig. 12          die Ausführungsform einer Extraktionskammer, bei der die Flüssigkeit gemeinsam mit komprimiertem Gas eingeleitet wird, und

Fig. 13          eine Ausführungsform der Extraktionskammer, bei der die Flüssigkeit durch ein Einspritzventil in den Dampfraum gebracht wird.

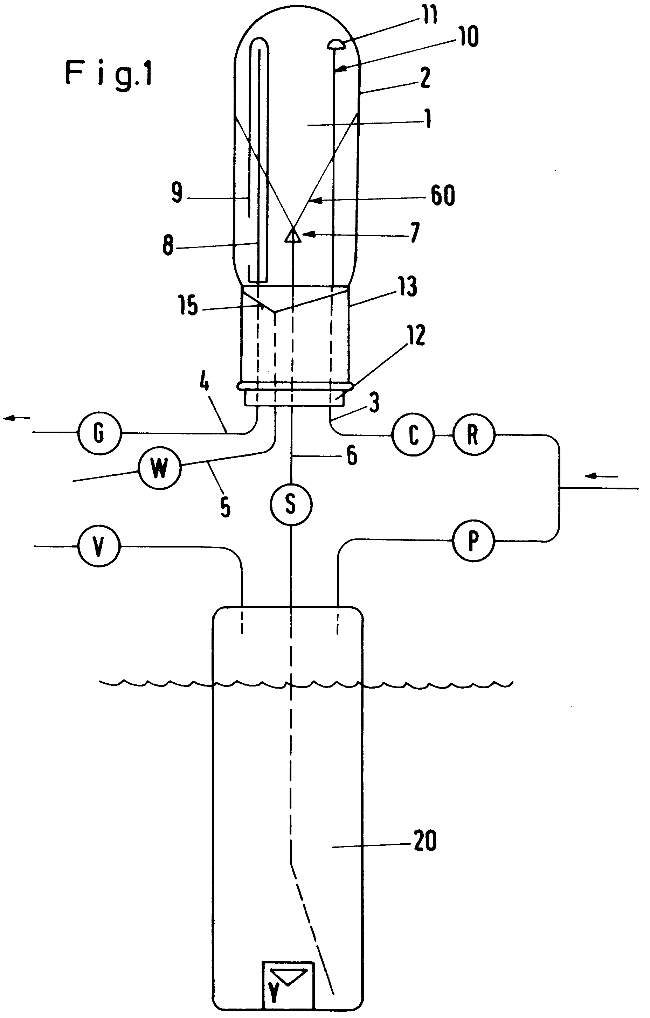

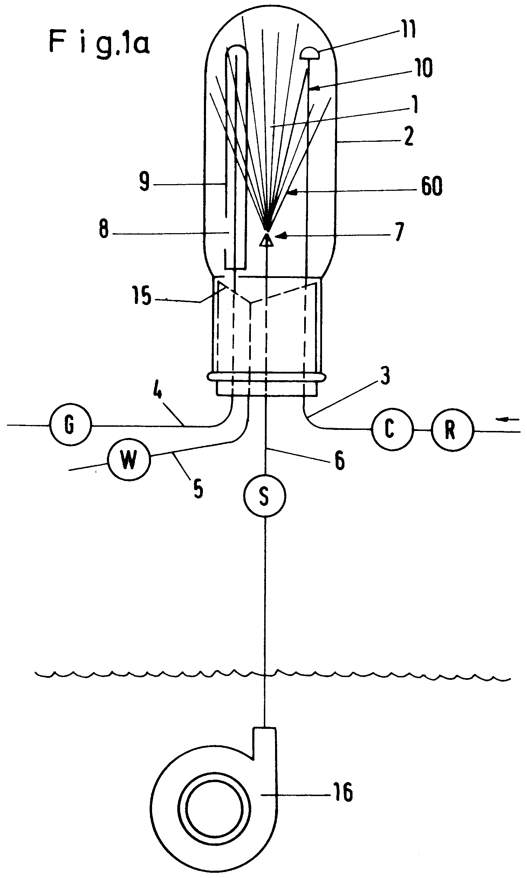

Fig. 1 zeigt eine schematische Gesamtansicht der erfindungsgemäßen Vorrichtung. Die Vorrichtung umfaßt eine Extraktionskammer 1, eine Probenkammer 20 und ein Ventilsystem C, G, P, R, S, V, W, das computerunterstützt gesteuert werden kann. An der Unterseite der Probenkammer 20 ist ein Druckventil Y vorgesehen, durch das die zu behandelnde Flüssigkeit in die Probenkammer 20 eintreten kann. Wenn das Füllen der Probenkammer 20 beendet werden soll, wird in die Probenkammer 20, steuerbar über das Ventil P, Druck aufgegeben, so wird das Einleiten von Wasser durch das Druckventil Y, welches dann schließt, unterbrochen. Die Flüssigkeit kann dann die Probenkammer 20 lediglich über das Probenraumventil S, das beispielsweise als magnetisches Abschaltventil gestaltet werden kann, in die Extraktionskammer 1 verlassen. Ein Wiederauffüllen der Probenkammer 20 ist möglich, indem man die Druckaufgabe unterbricht und den im Probenraum 20 herrschenden Druck über das Druckablaßventil V abbaut. Dieses Druckablaßventil V und das Druckgasventil P sind in Leitungen geschaltet, die in den oberen Bereich der Probenkammer 20 ragen. Das magnetische Abschaltventil S in der Übergangsleitung zwischen der Probenkammer 20 und der Extraktionskammer 1 ermöglicht es, daß Einsprühen oder Einspritzen der Flüssigkeit in die Extraktionskammer 1 praktisch verzögerungsfrei zu unterbrechen. Die Extraktionskammer 1 besteht aus einem Kolben, der im wesentlichen zylindrisch ist. An seiner Unterseite ist ein Hals 13 ausgebildet, der einen Stopfen 12 aufnimmt, mit dem der Kolben verschlossen wird. Durch den Stopfen 12 sind die benötigten Zuleitungen und Ableitungen geführt. Trägergas, das über ein Druckminderventil R und ein Trägergas-Einlaßventil C zugeleitet wird, wird der Extraktionskammer 1 über den Einlaß 3 aufgegeben. Der Einlaß 3 mündet in einer mit einer Schutzkappe 11 versehenen Einlaßröhre 10, die sich durch den Stopfen 12 hindurch im Inneren des Kolbens 2 erstreckt. Der Einlaß 6 für die Flüssigkeit erstreckt sich ebenfalls durch den Stopfen 12 und mündet in einer Injektionseinrichtung 7, mittels derer über speziell ausgestaltete Düsen die Flüssigkeit versprüht oder als Strahl ausgespritzt wird. Je nach Gestaltung der Düse wird der Strahl 60 mehr oder weniger weit aufgefächert. Die Probenentnahme erfolgt über den Auslaß 4 für das Trägergas. Dieser Auslaß 4 steht mit einer Gasauslaßröhre 8 in Verbindung, die wiederum durch den Stopfen 12 hindurch in das Innere des Kolbens 2 geführt ist. Die Auslaßröhre 8 ist mit einem Schutzmantel 9 versehen, der die Auslaßröhre 8 weitgehend vor Flüssigkeitströpfchen schützt, wobei das abzuführende Trägergas durch eine im Schutzmantel 9 vorgesehene Öffnung 92 in die Auslaßröhre 8 eintreten kann. In seiner zum Inneren des Kolbens 2 weisenden Seite ist am Stopfen 12 eine Senke 15 vorgesehen, an deren tiefster Stelle der Flüssigkeitsauslaß 5 mündet. Die sich im Inneren des Kolbens 2 befindliche Flüssigkeit kann über ein Flüssigkeitsablaßventil W abgeleitet werden. Es ist zweckmäßig, wenn in der Senke immer eine geringe Flüssigkeitsmenge verbleibt, damit das Trägergas nicht über den Flüssigkeitsauslaß 5 austritt.

Falls es nicht notwendig oder angebracht ist, eine Probenkammer zu verwenden, kann die Flüssigkeit in die Extraktionskammer auch mit Hilfe einer Pumpe zugeführt und dann in die Kammer verspritzt werden. Es ist auch möglich, eine Gasstrahl-Zerstäubungsvorrichtung zu verwenden, bei der die Flüssigkeit zusammen mit einem komprimierten inerten Gas zugeführt wird.

Fig. 1a zeigt eine solche alternative Ausführungsform mit einer unterhalb des Flüssigkeitsspiegels angeordneten Pumpe 16, die direkt über das magnetische Abschaltventil 5 mit der Extraktionskammer 1 verbunden ist. Diese entspricht in ihrem Aufbau der Extraktionskammer aus Fig. 1.

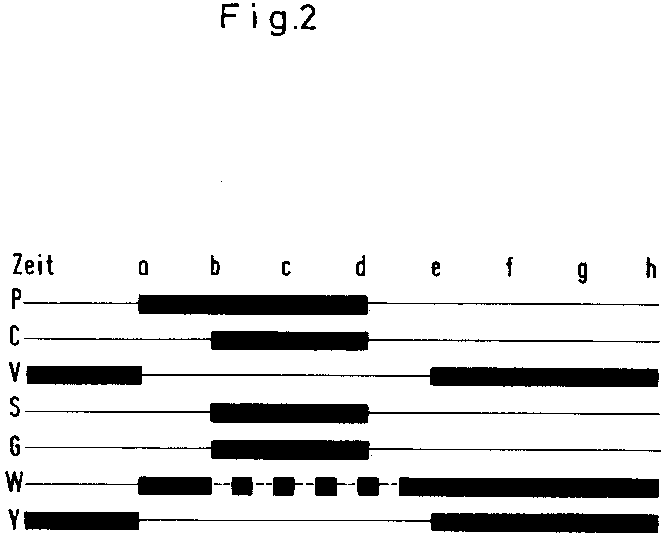

In Fig. 2 ist das Steuerdiagramm für die in der erfindungsgemäßen Vorrichtung vorgesehenen Ventil C, G, P, S, V, W, Y dargestellt. Für das Druckminderventil R ist keine Steuerung notwendig, es ist daher in diesem Diagramm nicht aufgeführt. Die hervorgehobenen Linien im Diagramm zeigen die Zeitdauern an, in denen die entsprechenden Ventile offen sind. Über das Druckgasventil P wird der Einlaß von unter Druck stehendem Gas in die Probenkammer geregelt, über das Trägergas-Einlaßventil C den Einlaß von Trägergas in die Extraktionskammer. Das Druckablaßventil V baut Überdruck in der Probenkammer ab, das Magnetabschaltventil S verbindet oder trennt den Probenraum und die Extraktionskammer. Das Trägergas-Auslaßventil G steuert den Ablaß von Trägergas aus der Extraktionskammer, das Flüssigkeitsablaßventil W erfüllt dieselbe Aufgabe für die abzulassende Flüssigkeit. Das Druckventil Y befindet sich im Boden der Probenkammer und schließt automatisch, wenn in der Probenkammer Überdruck herrscht. Zunächst sind das Druckventil Y und das Druckablaßventil V geöffnet, und Flüssigkeit kann in die Probenkammer eintreten. Zum Zeitpunkt a wird das Druckablaßventil V geschlossen, und über das Ventil P wird Druck auf die Probenkammer aufgegeben, so daß das Druckventil Y schließt. Das Flüssigkeitsablaßventil W wird zum Zeitpunkt a ebenfalls geöffnet, um Flüssigkeitsreste aus der Extraktionskammer abzuleiten. Zum Zeitpunkt b wird dann das Ventil S zwischen Probenraum und Extraktionskammer geöffnet. Zum gleichen Zeitpunkt schließt das Flüssigkeitsablaßventil W, welches anschließend aber immer periodisch geöffnet wird, um überschüssige Flüssigkeit abzuführen. Jedoch wird ein Flüssigkeitsspiegel über dem Flüssigkeitsablaß immer aufrechterhalten. Gleichzeitig mit dem Ventil S öffnen das Trägergas-Einlaßventil C und das Trägergas-Auslaßventil G. Wenn der Sprühprozeß beim Zeitpunkt d beendet ist, schließen die Ventile P, C, S, G. Das Flüssigkeitsablaßventil W wird kurz darauf geöffnet, anschließend, beim Zeitpunkt e, das Druckablaßventil V, um den Druck in der Probenkammer abzubauen, worauf sich auch das Druckventil Y am Boden der Probenkammer öffnet und neue Flüssigkeit in die Probenkammer einläßt. Ein Probenentnahmezyklus ist beim Zeitpunkt h abgeschlossen.

Um einen gewissen Flüssigkeitsstand in der Extraktionskammer zu halten, wodurch das Entweichen von Trägergas über den Flüssigkeitsablauf vermieden werden soll, kann auch ein in den Kolben ragendes U-Rohr mit aufgesetztem Kolben am Flüssigkeitsauslaß vorgesehen sein, so daß keine Flüssigkeit abgelassen wird, bevor nicht ein entsprechender Flüssigkeitsspiegel erreicht ist.

Es ist auch möglich, den Flüssigkeitsauslaß mit dem Dampfablaß zu kombinieren, wobei das Gas von der Flüssigkeit in einem weiteren Kolben getrennt wird. Hier besteht nicht die Gefahr, daß Dämpfe über den Flüssigkeitsauslaß verloren gehen.

Zusätzlich zum Extraktionskolben ist dann ein Flüssigkeits/Dampf-Trennkolben erforderlich. Die Flüssigkeit wird durch ein U-Rohr abgeleitet, das an seiner tiefsten Stelle einen Kolben aufweist und direkt mit dem Trennkolben verbunden ist.

Das von der Flüssigkeit getrennte Gas wird einem automatischen Probennehmer zugeführt, und die organischen, gegebenenfalls auch anorganischen, Stoffe werden in einer Sammelvorrichtung aufgefangen und angereichert. Nach dem Sammeln werden die Verbindungen desorbiert und einem Gaschromatographen zugeführt.

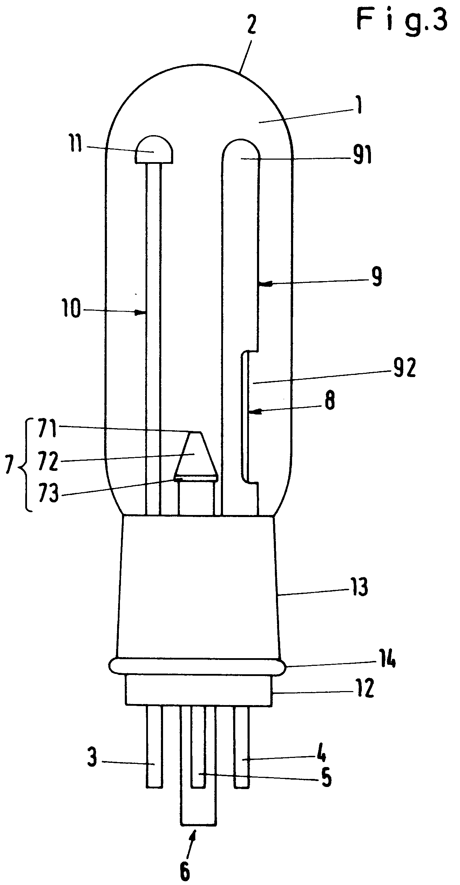

Fig. 3 zeigt eine Ansicht einer Extraktionskammer der erfindungsgemäßen Vorrichtung. Die Extraktionskammer besteht aus einem metallischen Kolben oder einem Glaskolben 2, dessen Innenfläche gesäubert und poliert ist. Der Kolben 2 ist im wesentlichen zylinderförmig und schließt an seiner Oberseite halbkugelartig ab. An seiner Unterseite verjüngt sich der Kolben 2 zu einem Hals 13 mit daran anschließendem Kragen 14. Der Kolben 2 wird mittels eines Stopfens 12 verschlossen, welcher in den Hals 13 geschoben werden kann. Dieser Stopfen 12 nimmt auch die unterschiedlichen Einlaß- und Auslaßvorrichtungen auf. Der Einlaß 3 für das Trägergas erstreckt sich durch den Stopfen 12 hindurch und mündet in einer Einlaßröhre 10, welche an ihrem oberen Ende mit einer Schutzkappe 11 versehen ist. So wird vermieden, daß in den Kolben 2 gesprühte Flüssigkeit die Einlaßröhre 10 verunreinigt. Der Flüssigkeitseinlaß 6 ist ebenfalls durch den Stopfen 12 geführt und mündet in einer Injektionseinrichtung 7, die hier aus einer Düse besteht. Die Düse weist eine Öffnung 71 für die auszuspritzende Flüssigkeit auf und ist über einen konisch sich erstreckenden Abschnitt 72 und eine Anschlußmanschette 73 mit dem Flüssigkeitseinlaß 6 verbunden. In den Stopfen 12 mündet weiterhin der Flüssigkeitsauslaß 5. Das Trägergas wird zusammen mit der gasförmigen Probe einer Gasauslaßröhre 8 zugeführt, welche mit einem Schutzmantel 9 versehen ist. Der Schutzmantel 9 weist einen halbkugelförmigen Abschluß an seinem oberen Abschnitt auf. Eine im Schutzmantel 9 vorgesehene Öffnung 92 erlaubt es dem Trägergas und der gasförmigen Probe, in die Gasauslaßröhre 8 zu gelangen. Die Öffnung 92 ist dem Flüssigkeitsstrahl abgewandt und zur Innenseite des Kolbens 2 gerichtet, so daß die Gefahr der Verschmutzung durch Flüssigkeit nicht besteht.

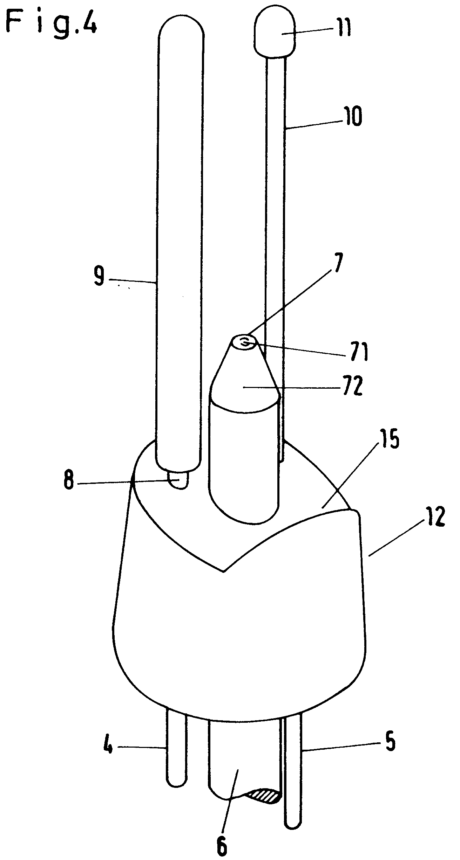

Fig. 4 zeigt eine Detailansicht der Einlässe und Auslässe für Flüssigkeit und Trägergas auf dem Stopfen 12. Der Stopfen ist an seiner hier dargestellten Oberseite mit einer Senke 15 versehen, in die der Flüssigkeitsauslaß 5 mündet. Der Flüssigkeitsauslaß 5 befindet sich somit an der tiefsten Stelle der Extraktionskammer 1. Der Probeneinlaß 6 ist zentral im Stopfen 12 vorgesehen. In dieser Ausführungsform ist er direkt mit einer als Düse ausgebildeten Injektionseinrichtung 7 verbunden. Die Düsenöffnung 71 befindet sich am oberen Ende des konisch sich verjüngenden Abschnittes 72, so daß die durch den Einlaß 6 eintretende Flüssigkeit in vertikaler Richtung nach oben ausgespritzt wird. Die Einlaßröhre 10 und die Auslaßröhre 8 ragen etwa in gleicher Länge durch den Stopfen 12 hindurch. Die Mündung der Einlaßröhre 10 an ihrem oberen Ende ist durch eine Schutzkappe 11 vor eindringender Flüssigkeit geschützt. Die Gasauslaßröhre 8 ist oberhalb des Stopfens 12 fast vollständig von einem Schutzmantel 9 umschlossen.

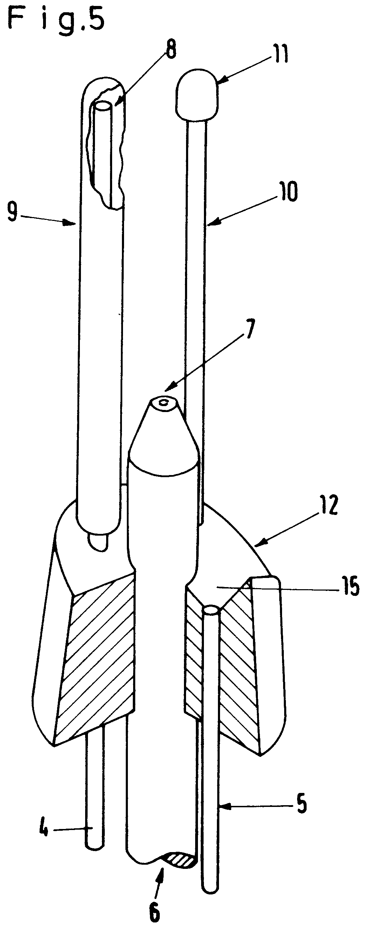

Fig. 5 zeigt eine ähnliche Ansicht der Anordnung der Einlässe und Auslässe, wobei der Stopfen 12 und der Schutzmantel 9 teilweise aufgerissen sind. Der Flüssigkeitsauslaß 5 ist als Röhre durch den Stopfen 12 geführt und mündet in der Senke 15 an der Oberfläche des Stopfens. Der Schutzmantel 9 umschließt die Gasauslaßröhre 8 so, daß die am oberen Ende der Gasauslaßröhre 8 befindliche Öffnung für das Trägergas ebenfalls umschlossen, jedoch frei umströmbar ist.

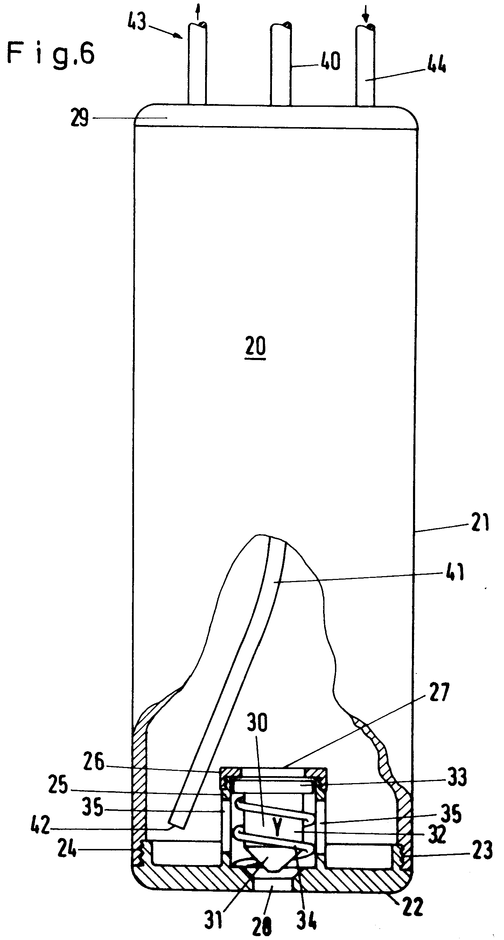

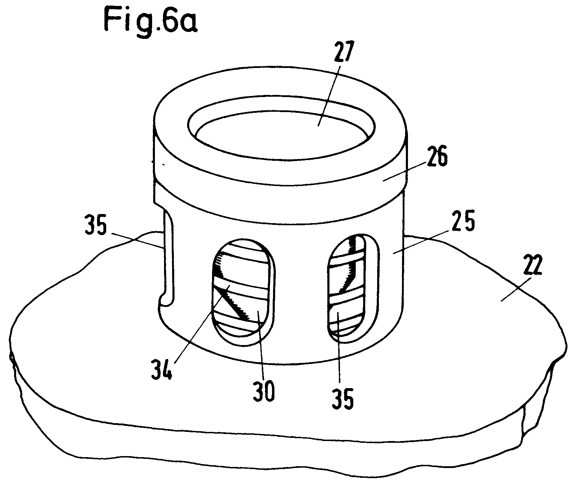

Fig. 6 zeigt die Probenkammer der erfindungsgemäßen Vorrichtung, wobei der untere Bereich der Probenkammer 20 teilweise aufgerissen dargestellt ist. Die Probenkammer 20 besteht aus einem zylinderförmigen Druckgehäuse 21, welche an ihrem oberen Ende mit einem Deckel 29 verschlossen, beispielsweise verschraubt ist. Durch den Deckel sind eine Druckgasleitung 44 geführt, durch die Druck auf die Probenkammer 20 aufgegeben werden kann, eine Druckminderleitung 43, durch die die Probenkammer 20 entlastet wird, sowie die Zuleitung 40, über die die Verbindung zur Extraktionskammer 1 hergestellt wird. Die Zuleitung 40 ragt in das Innere des Gehäuses 21 bis in die Nähe des Bodens 22, wobei ein stumpfwinkliges Knie 41 vorgesehen ist, so daß die Zuleitung 40 am Druckventil Y vorbeigeführt wird. Die Einlaßöffnung 42 für die Flüssigkeit befindet sich neben dem Druckventil Y in der Nähe des Bodens 22. Das Druckgehäuse 21 ist an seinem unteren Ende mit einem Innengewinde versehen, so daß der mit einem entsprechenden Außengewinde 24 versehene Boden 22 mit dem Druckgehäuse 21 verschraubt werden kann. Der Boden 22 weist eine zentrale Bodenöffnung 28 auf, die sich zum Gehäuseinneren hin konisch erweitert. Um die Bodenöffnung 28 ist ein Ventilgehäuse 25 vorgesehen, der mit einer aufgeschraubten Verschlußplatte 26 abschließt. Die Verschlußplatte 26 weist eine Öffnung 27 auf. Innerhalb des Hohlrohres 25 befindet sich ein Ventilkörper 30, dessen Zylinder 32 von einer Spiralfeder 34 umlegt ist. Diese Spiralfeder hält den konisch sich verjüngenden Endabschnitt 31 des Ventilkörpers 30 von der Bodenöffnung 28 entfernt, so daß Flüssigkeit in die Probenkammer 20 durch die Bodenöffnung 28 einströmen kann, wenn die Feder nicht belastet ist. Der Zylinder 32 trägt einen Kopf 33. Wird bei Druckaufgabe über die Druckgasleitung 44 die Spiralfeder 34 zusammengedrückt, verschließt der Endabschnitt 31 die Bodenöffnung 28, und die Flüssigkeitszufuhr wird unterbrochen.

Fig. 6a zeigt das Druckventil aus Fig. 6 in einer schematischen Ansicht. Das Ventilgehäuse 25 weist eine Vielzahl von Seitenöffnungen 35 auf, die das Einströmen von Flüssigkeit in die Probenkammer 20 erleichtern. Die Seitenöffnungen 35 sind in regelmäßigem Abstand voneinander angeordnet und erstrecken sich nahezu über die gesamte Höhe der Gehäusewand.

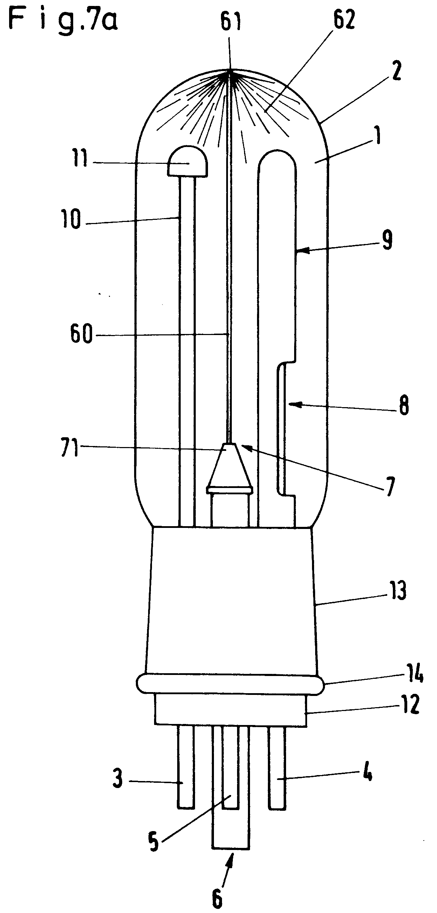

Fig. 7a zeigt eine Extraktionskammer 1, die der im Zusammenhang mit Fig. 3 beschriebenen Extraktionskammer entspricht. Durch die Düsenöffnung 71 der Injektionseinrichtung 7 tritt ein gebündelter Flüssigkeitsstrahl 60 in den Kolben 2 ein. Am Auftreffpunkt 61 im Inneren des Kolbens 2 wird der Flüssigkeitsstrahl 60 in Tröpfchen 62 aufgebrochen, die dann weitgehend radial-symmetrisch verteilt zum Kolbeninneren hin geleitet werden. Durch das Aufspritzen des Flüssigkeitsstrahls 60 wird eine große Kontaktoberfläche zwischen Flüssigkeit und Gas bereitgestellt, so daß sich das erwünschte Verteilungsgleichgewicht in kurzer Zeit einstellen kann.

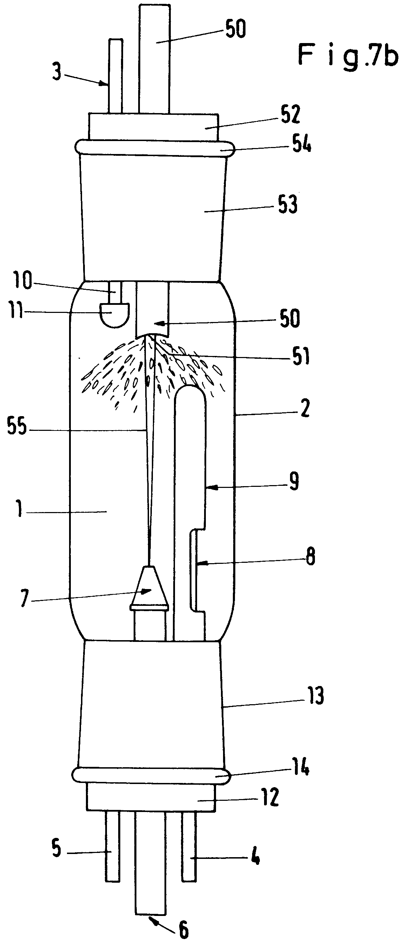

Fig. 7b zeigt eine weitere Ausführungsform der Extraktionskammer, bei der eine zusätzliche Vorrichtung zum Aufbrechen des Flüssigkeitsstrahls vorgesehen ist. Bei dieser Extraktionskammer 1 mündet der Kolben 2 sowohl an seinem unteren als auch an seinem oberen Ende in jeweils einem Hals 13, 53 mit Kragen 14, 54, die durch entsprechende Stopfen 12, 52 verschließbar sind. Durch den unteren Stopfen 12 sind der Flüssigkeitsauslaß 5, der Probeneinlaß 6 und der Auslaß 4 für das Trägergas geführt. Durch den oberen Stopfen 52 ist der Einlaß 3 für Trägergas geführt, der in einer Einlaßröhre 10 mündet, welche nach unten geöffnet in den Kolben 2 hineinragt. Die Mündung der Einlaßröhre 10 ist mit einer Schutzkappe 11 verschlossen. Zentral durch den Stopfen 52 hindurch ist weiterhin eine Stange 50 geführt, die über die Einlaßröhre 10 hinaus in das Innere des Kolbens 2 ragt. Die nach innen weisende Endfläche 51 der Stange 50 ist konkav gewölbt. Aus der Injektionseinrichtung 7 tritt ein Flüssigkeitsstrahl 55 aus, der auf die konkave Endfläche 51 der Stange 50 trifft. Der Strahl 55 wird hier aufgebrochen, wobei wegen der Krümmung der Endfläche 51 die entstehenden Flüssigkeitströpfchen so abgelenkt werden, daß die Einlaßröhre 10 von der Flüssigkeit nicht erreicht wird. Durch die entstehenden Tröpfchen wird wieder die große Kontaktoberfläche zwischen Flüssigkeit und Gas bereitgestellt, so daß Trägergas und gasförmige Probe, wie schon zuvor beschrieben, durch die Gasauslaßröhre 8 abgeleitet werden können.

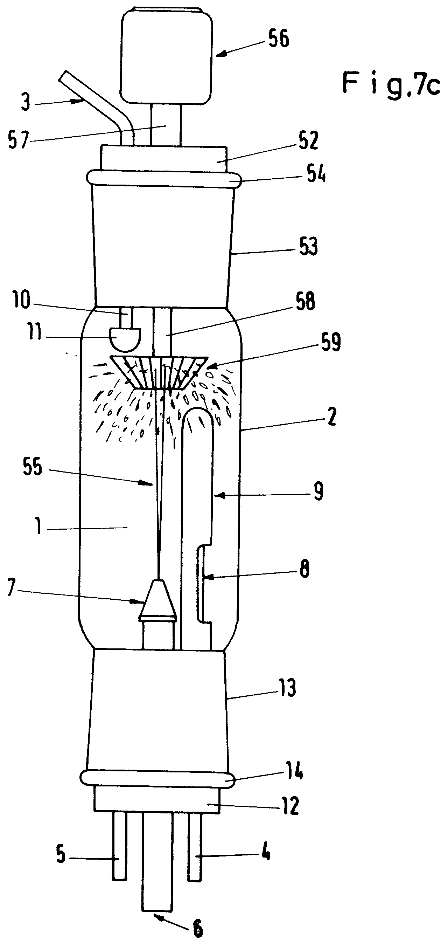

Fig. 7c zeigt eine weitere Ausführungsform der Extraktionskammer, bei der als Vorrichtung zum Aufbrechen des Flüssigkeitsstrahls ein motorgetriebener Drehteller 59 vorgesehen ist. Einlässe und Auslässe für Flüssigkeit und Trägergas sind wie bei der Ausführungsform nach Fig. 7b angeordnet, wobei hier jedoch der Einlaß 3 für das Trägergas über ein Knie seitlich weggeführt ist. Durch den oberen Stopfen 52 ragt die Schutzröhre 57 des Schaftes eines damit verbundenen Motors 56, der über eine Welle 58 den Drehteller 59 in Rotation versetzt. Der Drehteller 59 ist kegelstumpfförmig ausgebildet und weist Rippen oder Vorsprünge auf, die sich längs der Kegelstumpffläche erstrecken. Der Drehteller 59 verjüngt sich nach unten hin. Seine obere Fläche erstreckt sich über die Öffnung der Einlaßröhre 10 mit der Schutzkappe 11 hinaus. Der aus der Injektionseinrichtung 7 ausgespritzte Flüssigkeitsstrahl 55 trifft auf die untere Fläche des Drehtellers 5 auf und wird dort aufgebrochen. Die Rotation des Drehtellers 59 und die darauf angebrachten Rippen oder Vorsprünge bewirken, daß wiederum Flüssigkeitströpfchen entstehen, die wegen der großen Wirkoberfläche erwünscht sind. Die Flüssigkeitströpfchen werden wieder so abgeleitet, daß sie vorwiegend nach unten gelenkt sind und nicht auf die Einlaßröhre 10 treffen. Trägergas und gasförmige Probe können, wie zuvor beschrieben, durch die Auslaßröhre 8 abgeführt werden.

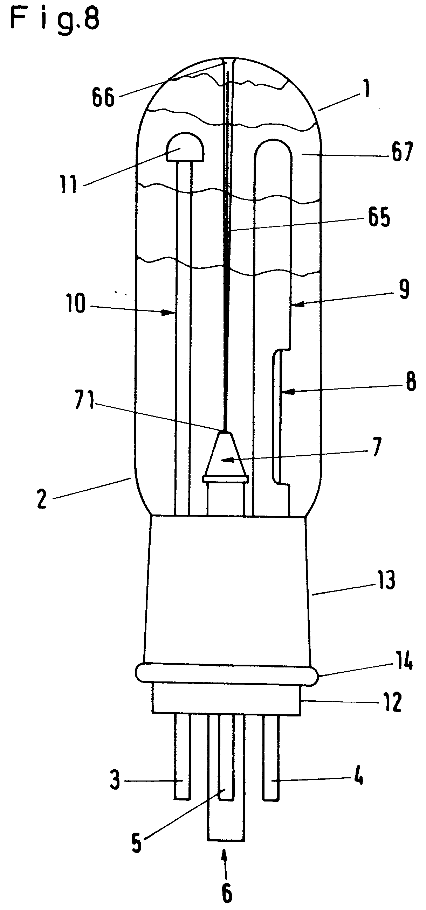

Fig. 8 zeigt die Extraktionskammer in der Ausführungsform wie in Fig. 7a, wobei der Flüssigkeitsstrahl 65 jetzt aus der Austrittsöffnung 71 der Injektionseinrichtung 7 mit geringerer Geschwindigkeit austritt, so daß er beim Auftreffen auf die Fläche 66 nicht zerplatzt, sondern als dünner Flüssigkeitsfilm 67 an den Innenwänden des Kolbens 2 entlang nach unten fließt. Durch die Filmbildung ist wiederum gegeben, daß eine große Kontaktfläche zwischen Flüssigkeit und Gas entsteht. Nach der Extraktion wird die Flüssigkeit über den Flüssigkeitsauslaß 5 abgeführt.

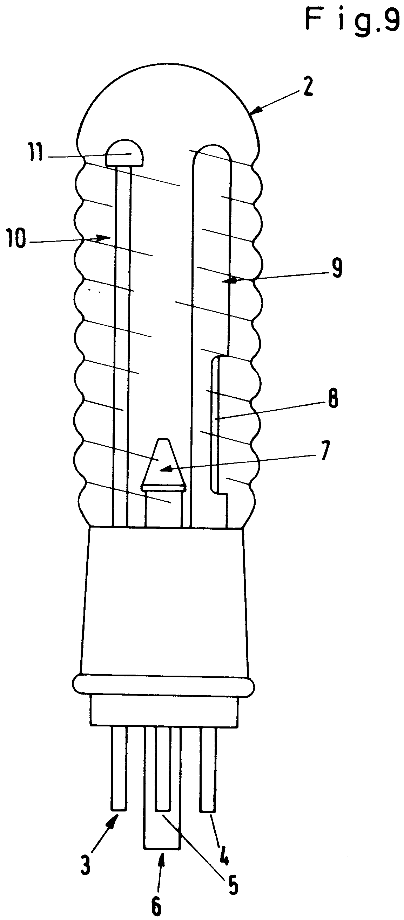

Fig. 9 zeigt eine Ausführungsform der Erfindung, bei der der Kolben 2 Seitenwände aufweist, welche ein wellenförmiges Profil haben. Wenn die Flüssigkeit wie bei der Ausführungsform nach Fig. 8 als dünner Film über diese Wände nach unten abfließt, ergibt sich gegenüber den Verhältnissen bei glatten Wänden eine nochmals vergrößerte Oberfläche. Die Anordnung von Einlässen und Auslässen für Flüssigkeit und Trägergas sowie der Injektionseinrichtung entspricht derjenigen der Ausführungsform nach Fig. 8.

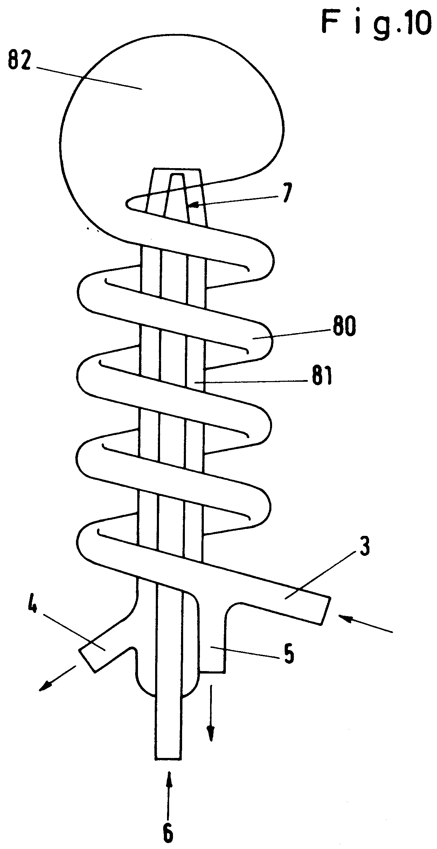

Fig. 10 zeigt eine Extraktionskammer, die anstelle des Kolbens der vorangegangenen Ausführungsformen ein wendelförmig geführtes Rohr 80 aufweist. Der Flüssigkeitseinlaß 6 erstreckt sich längs der Mittelachse der Wendel und mündet in einer Injektionseinrichtung 7. Die Flüssigkeit wird in die Sprühkammer 82 versprüht und kann längs der wendelförmigen Röhre 80 nach unten abfließen. Gegenströmig dazu wird am unteren Ende der Wendel über einen Einlaß 3 Trägergas eingeführt, welches sich zusammen mit der gasförmigen Probe nach oben bewegt. Es wird dann durch eine um den Flüssigkeitseinlaß 6 gelegte Röhre 81 über den Auslaß 4 abgeführt. Die an den Innenwänden der wendelförmigen Röhre 80 abfließende Flüssigkeit wird über den Flüssigkeitsauslaß 5, welcher sich an der Unterseite der letzten Wendel befindet, abgeführt.

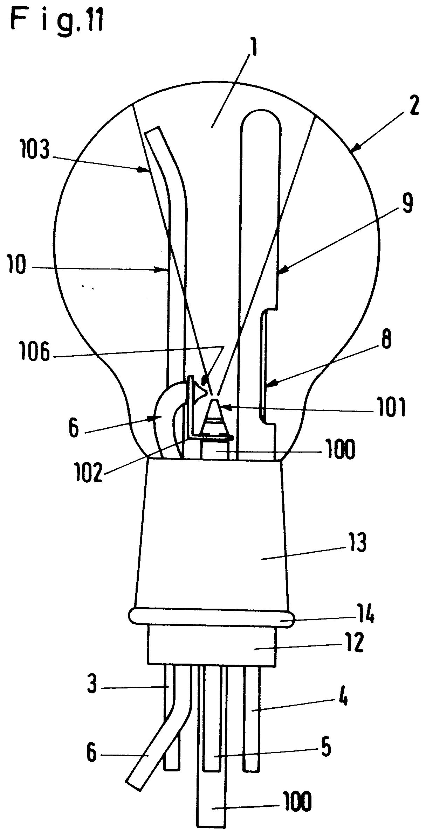

Fig. 11 zeigt eine Extraktionskammer 1, welche einen im wesentlichen kugel- oder birnenförmigen Kolben 2 aufweist. Dieser Kolben 2 mündet in einen Hals 13 mit Kragen 14 und wird durch einen Stopfen 12 verschlossen. Durch den Stopfen ist der Einlaß 3 für Trägergas geführt, wobei die Einlaßröhre 10 an ihrem oberen Ende stumpfwinklig abgeknickt ist. Der Auslaß 4 für Trägergas ist mit der Gasauslaßröhre 8 verbunden, welche mit einem Schutzmantel 9 versehen ist. Zentral im Stopfen 12 ist eine Druckgaszuleitung 100 geführt. Diese Druckgasleitung mündet in einer Gasdüse 101, deren Sprührichtung senkrecht nach oben gerichtet ist. Der Flüssigkeitseinlaß 6 verläuft ebenfalls durch den Stopfen und ragt aus diesem schwanenhalsartig gekrümmt heraus. Der Flüssigkeitseinlaß 6 mündet in der Injektionseinrichtung, wobei die Austrittsrichtung der Flüssigkeit 6 horizontal ist. Ein Winkel 102 richtet die Flüssigkeitsdüse 106 und die Gasdüse 101 genau rechtwinklig zueinander aus. Aus der Düse 106 austretende Flüssigkeit wird vom aus der Gasdüse 101 austretenden komprimierten Gas mitgerissen. Eine solche Gasstrahl-Zerstäubungsvorrichtung erzeugt nach dem Bernoulli-Prinzip ein dynamisches Vakuum. Mit dieser Methode erzeugt man die schmalsten Tröpfchen und somit die größte wirksame Flüssigkeitsoberfläche. Flüssigkeit und Luft oder ein inertes Gas werden in dem senkrecht zueinander ausgerichteten Düsensystem 106, 101 gekreuzt. Es resultiert ein weitgefächerter Sprühstrahl 103.

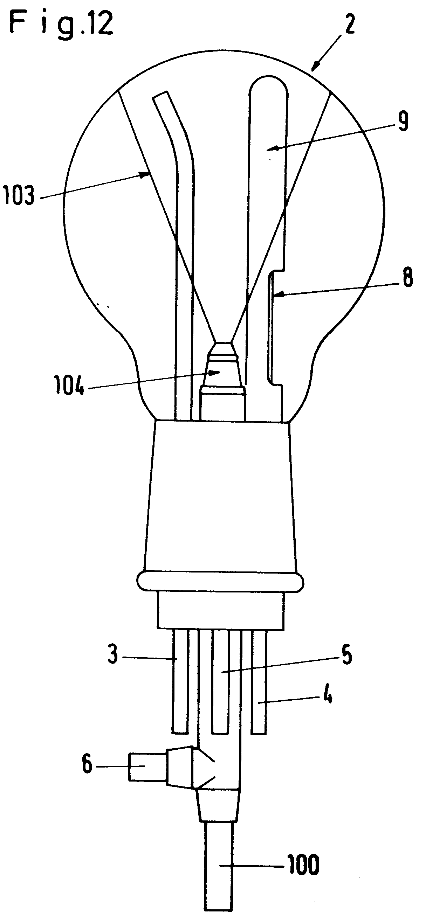

Nach dem gleichen Prinzip arbeitet die Ausführungsform gemäß Fig. 12. Die Druckgasleitung 100 und der Flüssigkeitseinlaß 6 werden zusammengeführt und in einer Flüssigkeitssprühdüse 104 aus konzentrischen Röhren vermischt. Das Zerstäubergas kann hier gleichzeitig Trägergas sein, so daß unter Umständen ein Einlaß 3 für Trägergas entfallen kann.

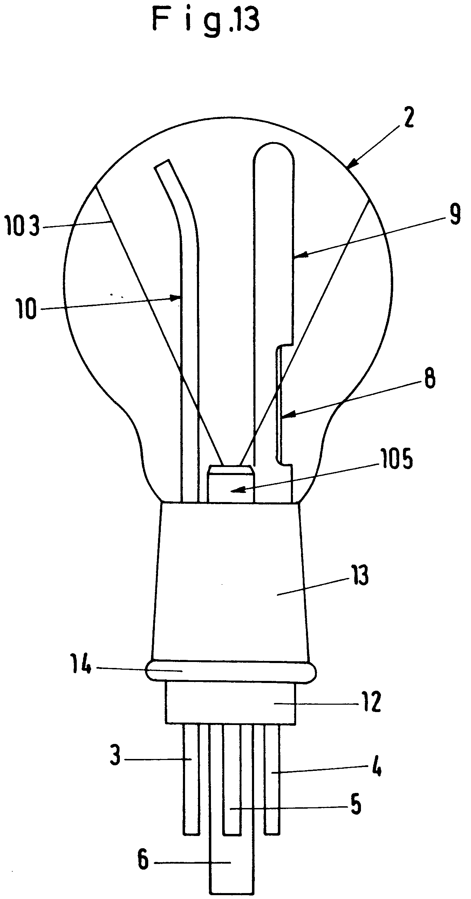

In der Ausführungsform gemäß Fig. 13 wird zum Ausspritzen der Flüssigkeit ein Flüssigkeitseinspritzventil 105 verwendet, das sich bei einem bestimmten Druck so öffnet, daß ein Flüssigkeitsfilm in Form eines Sprühkegels gebildet wird. Diese Ausführungsform ist geeignet, wenn die Flüssigkeit aus der Probenkammer gepumpt wird. Da hier mit einem konstanten Flüssigkeitsstrom gearbeitet wird, wird der Flüssigkeitsfilm um so dünner, je weiter er von dem Flüssigkeitseinspritzventil 105 entfernt ist und schließlich in kleine Tröpfchen aufbricht. Dieser Aufbrechpunkt hängt vom Öffnungswinkel des Sprühkegels und von der Oberflächenspannung der Flüssigkeit ab. Das Ventil 105 kann auch einstellbar ausgebildet werden, so daß die Flüssigkeitsfilmdicke, die Austrittsgeschwindigkeit, der Aufbrechpunkt und der Druck, bei dem das Ventil öffnet, einstellbar sind.

Bei jeder der Ausführungsformen der Extraktionskammer können zusätzliche Zuleitungen und Ableitungen für Wasser oder eine andere Reinigungsflüssigkeit vorgesehen sein, mit denen das Innere der Kammer ausgespült werden können. Die Kolben der Extraktionskammer bestehen vorzugsweise aus Glas oder Metall, die Stopfen aus Polytetrafluorethylen.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung in ihren verschiedenen Ausführungsformen wesentlich sein.

**Patentansprüche**

1. Verfahren zum Extrahieren gelöster flüchtiger Substanzen aus Flüssigkeiten in die Gasphase, bei dem die extrahierten gasförmigen Substanzen aus einem Dampfraum abgezogen werden, dadurch gekennzeichnet, daß die die Substanz(en) enthaltende Flüssigkeit in den Dampfraum versprüht wird.

2. Verfahren nach Anspruch 1, dadurch gekennzeichnet, daß das Versprühen der Flüssigkeit durch Druckbeaufschlagung derselben bewirkt wird.

3. Verfahren nach Anspruch 1, dadurch gekennzeichnet, daß das Versprühen der Flüssigkeit durch ein druckbeaufschlagtes Gas bewirkt wird.

4. Verfahren nach einem der vorangehenden Ansprüche, dadurch gekennzeichnet, daß eine vorbestimmte Flüssigkeitsmenge gesammelt wird, bevor die Flüssigkeit versprüht wird.

5. Verfahren nach einem der vorangehenden Ansprüche, dadurch gekennzeichnet, daß der Dampfraum über einem Flüssigkeitsspiegel gehalten wird.

6. Vorrichtung zum Extrahieren gelöster flüchtiger Substanzen aus Flüssigkeiten in die Gasphase, mit einer Extraktionskammer, welche einen Flüssigkeitseinlaß, einen Flüssigkeitsauslaß und einen Auslaß zur Probenentnahme aufweist, insbesondere zur Durchführung des Verfahrens nach einem der vorangehenden Ansprüche, dadurch gekennzeichnet, daß eine Injektionseinrichtung (7) zum Versprühen der Flüssigkeit vorgesehen ist, welche den Probeneinlaß (6) umfaßt und in welcher der Probeneinlaß (6) in die Extraktionskammer (1) mündet.

7. Vorrichtung nach Anspruch 6, dadurch gekennzeichnet, daß ein Einlaß (3) für ein Trägergas vorgesehen ist, wobei das Trägergas zusammen mit der gasförmigen Probe ableitbar ist.

8. Vorrichtung nach Anspruch 6 oder 7, dadurch gekennzeichnet, daß die Injektionseinrichtung (7) ein Einspritzventil umfaßt.

9. Vorrichtung nach einem der Ansprüche 6 bis 8, dadurch gekennzeichnet, daß die Injektionseinrichtung (7) eine Düse (71, 72, 73) umfaßt, in welche der Probeneinlaß (6) mündet.

10. Vorrichtung nach einem der Ansprüche 6 bis 8, dadurch gekennzeichnet, daß die Injektionseinrichtung (7) eine Gasstrahl-Zerstäubungsvorrichtung (100, 101) aufweist.

11. Vorrichtung nach einem der Ansprüche 6 bis 8, dadurch gekennzeichnet, daß ein federgesteuertes Einspritzventil (105) vorgesehen ist, welches einen konischen Sprühmantel einstellbaren Öffnungswinkels erzeugt.

12. Vorrichtung nach einem der Ansprüche 6 bis 11, dadurch gekennzeichnet, daß die Flüssigkeit vor dem Versprühen in einer Probenkammer (20) gesammelt wird.

13. Vorrichtung nach einem der Ansprüche 6 bis 12, dadurch gekennzeichnet, daß die Wände der Extraktionskammer (1) zumindest teilweise ein wellenartiges Profil aufweisen.

14. Vorrichtung nach einem der Ansprüche 6 bis 13, dadurch gekennzeichnet, daß die Extraktionskammer (1) aus einem wendelförmig geführten Rohr (8) gebildet ist.

15. Vorrichtung nach einem der Ansprüche 6 bis 14, dadurch gekennzeichnet, daß in der Extraktionskammer (1) eine Vorrichtung (50, 59) zum Aufbrechen des Flüssigkeitsstrahls vorgesehen ist.

16. Vorrichtung nach Anspruch 15, dadurch gekennzeichnet, daß die Vorrichtung zum Aufbrechen des Flüssigkeitsstrahls eine wenigstens teilweise in die Extraktionskammer (1) ragende Stange (50) ist.

17. Vorrichtung nach Anspruch 15, dadurch gekennzeichnet, daß die Vorrichtung zum Aufbrechen des Flüssigkeitsstrahls einen in die Extraktionskammer (1) ragenden Drehteller (59) aufweist.

18. Vorrichtung nach einem der Ansprüche 6 bis 17, dadurch gekennzeichnet, daß der Einlaß (3) für das Trägergase an seinem in die Extraktionskammer (1) ragenden Ende (10) mit einer Schutzkappe (11) versehen ist.

19. Vorrichtung nach einem der Ansprüche 6 bis 18, dadurch gekennzeichnet, daß der in die Extraktionskammer (1) ragende Bereich (8) des Auslasses (4) für das Trägergas wenigstens teilweise mit einem Schutzmantel (9) versehen ist.

20. Vorrichtung nach Anspruch 19, dadurch gekennzeichnet, daß der Schutzmantel (9) im Bereich des Bodens der Extraktionskammer (1) mit einer Seitenöffnung (92) versehen ist und daß die ansonsten vom Schutzmantel (9) umschlossene Auslaßröhre (8) in den Innenraum der Extraktionskammer (1) hochragt.

Fig.1

F i g. 1a

# Fig.2

# Fig.3

Fig.4

# F i g.5

# Fig.6

Fig.6a

# F i g.7a

F i g.7b

Fig.7c

# Fig.8

# Fig.9

# F i g.10

Fig.11

# F i g.12

# F i g .13